# EUROPÄISCHE PATENTSCHRIFT

(11) **EP 4 035 950 B1**
(45) Veröffentlichungstag und Bekanntmachung des Hinweises auf die Patenterteilung: **11.10.2023**
(21) Anmeldenummer: 22154145.1
(22) Anmeldetag: 31.01.2022
(51) Int. Cl.: B60R 19/02, B60R 19/12, B60R 19/18

(54) **STOSSFÄNGERANORDNUNG MIT ENDSEITIGEM HOHLPROFIL**
BUMPER ASSEMBLY WITH HOLLOW PROFILE AT THE END
AGENCEMENT DE PARE-CHOCS À PROFILÉ CREUX D'EXTRÉMITÉ

(30) Priorität: 02.02.2021 DE 102021102368
(43) Veröffentlichungstag der Anmeldung: 03.08.2022
(73) Patentinhaber: Benteler Automobiltechnik GmbH, 33102 Paderborn (DE)
(72) Erfinder: Orzelek, Patrick, 33129 Delbrück (DE); Rabl, Stephan, 85051 Ingolstadt (DE); Paare, Mirko, 33106 Paderborn (DE)
(74) Vertreter: Osterhoff, Utz

(56) Entgegenhaltungen:
- EP-A1- 3 858 683
- EP-A1- 4 001 022
- WO-A1-2019/034483
- DE-A1-102005 018 348
- DE-A1-102017 124 590
- DE-U1-202020 005 403
- DE-U1-202021 103 263

## Beschreibung

Die vorliegende Erfindung betrifft eine Stoßfängeranordnung für ein Kraftfahrzeug gemäß den Merkmalen im Oberbegriff von Anspruch 1.

Aus dem Stand der Technik ist es bekannt, dass Kraftfahrzeuge front- bzw. endseitig Stoßfängeranordnungen aufweisen. Im Falle eines Fahrzeugcrashes bzw. eines Auffahrunfalls oder auch eines Anpralls an einen Gegenstand, werden durch eine solche Stoßfängeranordnung zwei Aufgaben erfüllt. Zum einen ist ein Querträger vorhanden. Der Querträger besitzt eine hinreichende Steifigkeit um zu verhindern, dass ein entsprechender Gegenstand oder ein Kraftfahrzeug zu stark in den Front- oder Endbereich eindringen würde. Mithin wird ein evtl. punktuelles Auftreffen, beispielsweise auf einen Pfahl, durch den Querträger auf einen Großteil der Kraftfahrzeugbreite übertragen.

Eine zweite Aufgabe, die durch eine Stoßfängeranordnung erfüllt wird, ist die Wandlung von Crashenergie in Umformabarbeit und dadurch eine entsprechende Verminderung der Aufprallenergie. Hierzu ist ein jeweiliger Querträger über Crashboxen an das Kraftfahrzeug gekoppelt. Die Crashboxen sind hierzu auf die Kraftfahrzeugquerrichtung bezogen, zwischen einem Mittelbereich und einem Endbereich des Querträgers angeordnet, mithin auf die Kraftfahrzeugbreite bezogen, jeweils zwischen einem Drittel und einem Viertel mit der Länge im äußeren Bereich des Querträgers angeordnet. Die Crashboxen werden dann zumeist an Längsträger des Kraftfahrzeugs gekoppelt. Im Falle eines Aufpralls falten sich die Crashboxen beispielsweise ziehharmonikaartig und wandeln somit Crashenergie in Umformarbeit um.

Beispielsweise sind aus der DE 10 2017 124 590 A1, WO 2019/034483 A1 oder DE 10 2005 018 348 A1 Stoßfängeranordnungen mit einem Haupt- und Hilfsquerträger bekannt.

Aufgabe der vorliegenden Aufgabe ist es, eine Stoßfängeranordnung bereitzustellen, die gegenüber dem Stand der Technik verbesserte Crasheigenschaften, insbesondere im Endbereich aufweist.

Die vorliegende Erfindung wird erfindungsgemäß mit den Merkmalen einer Stoßfängeranordnung im Anspruch 1 gelöst.

Vorteilhafte Ausgestaltungsvarianten sind in den abhängigen Ansprüchen beschrieben.

Die Stoßfängeranordnung für ein Kraftfahrzeug weist einen oberen Hauptquerträger auf. Dieser ist über Crashboxen an dem Kraftfahrzeug gekoppelt, ferner auf die Kraftfahrzeugvertikalrichtung bezogen, unterhalb des Hauptquerträgers angeordneten Hilfsquerträger. Der Hauptquerträger und der Hilfsquerträger sind miteinander über vertikale Streben gekoppelt. Die Stoßfängeranordnung, mithin der Hauptquerträger und vorzugsweise auch der Hilfsquerträger erstrecken sich dabei über mindestens 70 Prozent der Fahrzeugbreite, bevorzugt auch über mehr als 75, ganz besonders mehr als 80 Prozent der Kraftfahrzeugbreite in Kraftfahrzeugquerrichtung. Insbesondere bezieht sich die Angabe auf die Außenflächen der gegenüberliegenden Räder der Vorderachse.

Ferner weist die erfindungsgemäße Stoßfängeranordnung Endabschnitte auf, die in Kraftfahrzeugquerrichtung gegenüber den Crashboxen seitlich überstehen. Dies bedeutet, die Crashboxen sind nicht auf die Kraftfahrzeugquerrichtung bezogen im Endbereich selbst angeordnet, vielmehr steht der Hauptquerträger und der Hilfsquerträger seitlich nochmals über die Crashbox über.

Erfindungsgemäß zeichnet sich die Stoßfängeranordnung dadurch aus, dass in äußeren Abschnitt des Endbereiches ein vertikal orientiertes Hohlprofil befestigt ist.

Das Hohlprofil weist insbesondere einen geschlossenen Querschnitt auf. Der geschlossene Querschnitt ist dabei in einer XY-Ebene, mithin einer Ebene, die durch die Kraftfahrzeugquerrichtung und Kraftfahrzeuglängsrichtung aufgespannt wird. Eine Mittellängsachse des Hohlprofils selber ist dann in Kraftfahrzeugvertikalrichtung orientiert. Das Hohlprofil ist bevorzugt durch Extrusion, insbesondere aus Leichtmetall hergestellt.

Erfindungsgemäß wird in Verbindung mit der Breite der Stoßfängeranordnung nach folgender Effekt erzielt.

Der äußere Endabschnitt des Endbereiches, mithin das auf die Kraftfahrzeugquerrichtung jeweils außenliegende Ende ist, auf die Kraftfahrzeugquerrichtung bezogen, auf Höhe eines dahinter liegenden Rades angeordnet. Im Falle einer vorderen Stoßfängeranordnung wird somit bei Auftreffen auf einen Gegenstand, mithin einem Crashszenario, die Stoßfängeranordnung in Richtung zu dem Kraftfahrzeug, mithin in Kraftfahrzeuglängsrichtung deformiert. Die Crashboxen werden dabei umgeformt und bauen Crashenergie durch Umformarbeit ab. Der äußere Abschnitt des Endbereiches trifft dann auf ein in Kraftfahrzeuglängsrichtung dahinterliegendes Radhaus und bei weiterer Deformation auf das in Kraftfahrzeuglängsrichtung wiederum dahinterliegende Rad auf. Das Rad ist über eine Radaufhängung abgestützt. Ist die Crashintensität derart hoch, dass auch die Radaufhängung deformiert wird, wird das Rad weiterhin in Kraftfahrzeuglängsrichtung auf einen dahinter befindlichen Schweller verschoben.

Durch das erfindungsgemäß angeordnete Hohlprofil, welches einen geschlossenen Querschnitt der Hohlkammer aufweist, kann somit weitere Crashenergie durch Umformarbeit abgebaut werden. Der Querschnitt des Hohlprofils verformt sich bei Auftreffen auf das Radhaus bzw. das Rad ebenfalls und baut hier Crashenergie durch Umformarbeit ab. Gleichzeitig werden Hauptquerträger und/oder Hilfsquerträger allein oder deren Verbindung versteift, stabilisiert und in ihrem Deformatinsverhalten insbesondere synchronisiert.

Ein zweiter wesentlicher Aspekt ist, dass die Fläche, mit welcher die Stoßfängeranordnung aufgrund des Hohlprofils auf das dahinter befindliche Radhaus bzw. Rad auftrifft, deutlich vergrößert ist. Dies bringt wiederum zwei Vorteile mit sich. Durch die vergrößerte Auflagenfläche, insbesondere eine Auflagefläche, die keine scharfen Kanten aufweist, wird verhindert, dass ein Eindringen in das Rad zu einem Zerschneiden oder Platzen des Reifens führt. Ein zweiter Aspekt ist hierbei, die vergrößerte Fläche in Kraftfahrzeugvertikalrichtung, so dass das Rad nicht unter- bzw. unterwandert wird, mithin die Stoßfängeranordnung nach unten oder oben über das Rad hinweg gleitet. Auf die Kraftfahrzeugvertikalrichtung bezogen, ist die Auftrefffläche relativ groß, so dass dann die Stoßfängeranordnung auch auf das Rad auftrifft und dieses in Kraftfahrzeuglängsrichtung weiter auftrifft und nicht über dieses hinweggleitet.

Weiterhin bevorzugt ist das Hohlprofil mit dem Hauptquerträger und/oder dem Hilfsquerträger gekoppelt. Das Hohlprofil kann somit endseitig mit den Hauptquerträger oder den Hilfsquerträger gekoppelt sein. Es kann sich auf die Kraftfahrzeugvertikalrichtung, beispielsweise nur in etwa über die Höhe des Hauptquerträgers erstrecken. Das Hohlprofil kann sich jedoch besonders bevorzugt, auch über einen Großteil der Höhe auf die Kraftfahrzeugvertikalrichtung bezogen, der gesamten Stoßfängeranordnung erstrecken, mithin also auch Hauptquerträger und Hilfsquerträger miteinander verbinden. Dadurch werden Hauptquerträger und/oder Hilfsquerträger allein sowie deren Verbindung untereinander versteift, stabilisiert und in ihrem Deformationsverhalten synchronisiert. Auch kann das Hohlprofil sich zwischen Hauptquerträger und Hilfsquerträger erstrecken.

Hauptquerträger und Hilfsquerträger sind insbesondere einstückig und werkstoffeinheitlich ausgebildet. Dies entweder aus einer Stahllegierung als Pressumformbauteil. Hauptquerträger und Hilfsquerträger weisen jeweils eine Querschnittsprofilierung, beispielsweise U-förmig, C-förmig oder hutförmig auf. Es können zumindest abschnittsweise Schließbleche angeordnet sein, so dass Hauptquerträger oder Hilfsquerträger jeweils als abschnittsweise geschlossenes Hohlprofil ausgebildet sind.

Eine weitere Ausgestaltungsvariante sieht vor, dass Hauptquerträger und Hilfsquerträger aus einem Extrusionsprofil hergestellt sind, mithin aus einer Leichtmetalllegierung. Hauptquerträger und Hilfsquerträger sind dann bevorzugt für sich im Querschnitt als geschlossenes Hohlprofil ausgebildet.

Erfindungsgemäß sind mehrere vertikale Streben derart zwischen Hauptquerträger und Hilfsquerträger angeordnet und ausgebildet, dass sie diese versteifen und hinsichtlich ihres Deformationsverhaltens zusätzlich besser aufeinander abstimmen.

Vertikale Streben sind einstückig und werkstoffeinheitlich , jeweils Hauptquerträger und Hilfsquerträger verbindend, ausgebildet.

Das erfindungsgemäße Hohlprofil ist dann besonders bevorzugt im äußeren Abschnitt des Endbereiches entweder in Alleinstellung den Hauptquerträger und den Hilfsquerträger verbindend angeordnet. Das Hohlprofil kann jedoch auch im Endbereich zusätzlich zu einem dort einstückig und werkstoffeinheitlich ausgebildeten vertikalen Steg angeordnet sein oder auch zusätzlich an einem vertikalen Steg, der selbst mit Haupt- und Hilfsquerträgern gekoppelt ist. Insbesondere können dann die erfindungsgemäßen Vorteile einer zusätzlichen Deformation sowie einer Vergrößerung der Auflagenfläche erreicht werden.

Das Hohlprofil kann als außenliegender vertikaler Steg Hauptquerträger und Hilfsquerträger miteinander koppeln. Es kann jedoch auch einstückig und werkstoffeinheitlich hergestellte Hauptquerträger und Hilfsquerträger bereits ein vertikaler Steg vorhanden sein. Das Hohlprofil wird dann zusätzlich zu diesem bereits vorhandenen vertikalen Steg angeordnet.

Insbesondere findet eine Anordnung des Hohlprofils außenseitig und/oder in Richtung zu dem Kraftfahrzeug bzw. dem Rad an der Rückseite statt. Im Falle eines Kraftfahrzeugcrashes trifft somit das zusätzliche Hohlprofil als erstes auf das Radhaus bzw. das dahinterliegende Rad auf.

Die Koppelung erfolgt insbesondere stoffschlüssig durch ein Schweißverfahren. Auch ist jedoch auch ein Nietverfahren oder ähnliches denkbar, beispielsweise durch Verpressen.

Im Falle eines bereits vorhandenen vertikalen Steges zwischen Hauptquerträger und Hilfsquerträger ist insbesondere eine zusätzliche formschlüssige Koppelung vorgesehen. Im Crashfalle kann somit bewusst ein Abreißen des Hohlprofils verhindert werden, da zum einen eine Koppelung, beispielsweise durch Stoffschluss besteht und zusätzlich die formschlüssige Koppelung gerade im Crashfall eine gesteigerte Verbindung darstellt.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren wiedergegeben.

Diese dienen dem einfachen Verständnis der Erfindung. Es zeigen
- Figur 1: eine perspektive Darstellung einer erfindungsgemäßen Stoßfängeranordnung,
- Figur 2a bis d: eine erste Ausgestaltungsvariante der Erfindung in Front- und Queransichten,
- Figur 3a bis e: eine zweite Ausgestaltungsvariante der Erfindung in Front- und Queransichten,
- Figur 4a bis d: eine dritte Ausgestaltungsvariante der Erfindung in Front- und Queransichten,
- Figur 5: ein Crashszenario einer erfindungsgemäßen Stoßfängeranordnung,
- Figur 6a bis d: eine vierte Ausführungsvariante der Erfindung in Front- und Queransichten und
- Figur 7: eine weitere Ausführungsvariante der Erfindung in perspektivischer Ansicht auf den Endbereich der Stoßfängeranordnung,
- Figur 8a bis c: zeigen eine Frontansicht eines seitlichen Teils einer weiteren Ausführungsvariante der Erfindung sowie zwei Schnittansichten.

In den Figuren werden für gleiche oder ähnliche Bauteile dieselben Bezugszeichen verwendet, auch wenn eine wiederholte Beschreibung aus Vereinfachungsgründen entfällt.

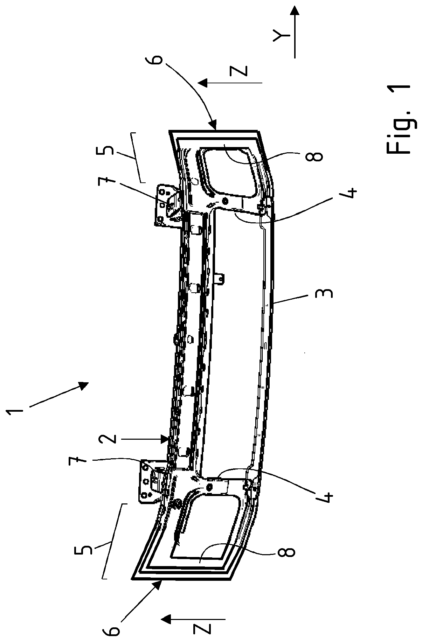

Figur 1 zeigt eine erfindungsgemäße Stoßfängeranordnung 1 für ein nicht näher dargestelltes Kraftfahrzeug. Die Stoßfängeranordnung 1 weist einen oberen Hauptquerträger 2 sowie ein auf die Kraftfahrzeugvertikalrichtung Z bezogen darunter befindlichen Hilfsquerträger 3 auf. Der Hauptquerträger 2 und der Hilfsquerträger 3 sind über vertikale Streben 4 miteinander gekoppelt. In den jeweiligen Endbereichen bzw. Endabschnitten 5 ist ein zusätzliches vertikales Element 8 als Verbindungssteg vorgesehen, welches ebenfalls den Haupt- und Hilfsquerträger 2, 3 miteinander koppelt. Dies bildet gleichsam das äußere Ende 6 der Stoßfängeranordnung 1 aus. Der Hauptquerträger 2 ist über Crashboxen 7 mit dem nicht näher dargestellten Kraftfahrzeug gekoppelt. Die vertikalen Streben 4 können sich nicht näher dargestellt, ebenfalls an den Crashboxen 7 abstützen.

Die Stoßfängeranordnung 1 steht mit einem jeweiligen Endabschnitt in Kraftfahrzeuquerrichtung Y seitlich über die Crashboxen 7 über.

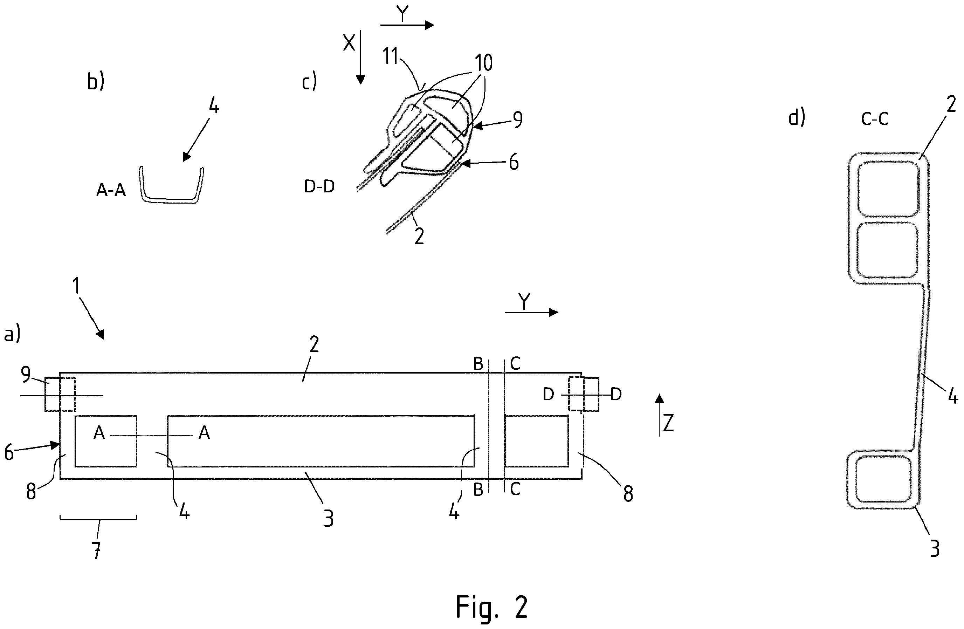

Figur 2a bis e zeigen eine erste Ausgestaltungsvariante der vorliegenden Erfindung. Figur 2a zeigt eine Frontansicht. Auf die Kraftfahrzeugvertikalrichtung Z bezogen, ist oben ein Hauptquerträger 2 angeordnet sowie darunter ein Hilfsquerträger 2. Der Hauptquerträger 2 und der Hilfsquerträger 3 sind jeweils über vertikale Streben 4 miteinander gekoppelt. Am äußeren Ende des Endabschnittes ist zusätzlich eine vertikale Verbindungstrebe befestigt. Diese vertikale Verbindungsstrebe verbindet ebenfalls Hauptquerträger 2 und Hilfsquerträger 3. Hinter dem Hauptquerträger 2, jedoch nicht näher dargestellt, sind die Crashboxen 7 angeordnet.

Erfindungsgemäß ist nunmehr ein Hohlprofil 9 an dem äußeren Ende 6, hier im Bereich des Hauptquerträgers 2 angeordnet. Eine Querschnittsansicht des Hohlprofils 9 ist in Figur 2c dargestellt gemäß der Schnittlinie D-D. Das Hohlprofil ist an das äußere Ende des Hauptquerträgers 2 endseitig eingesteckt und steht somit in Kraftfahrzeugquerrichtung Y außenseitig über den Hauptquerträger 2 über. Ferner ist es auf die Kraftfahrzeuglängsrichtung X bezogen hinter dem Hauptquerträger 2 angeordnet. In diesem Beispiel weist das Hohlprofil drei geschlossene Hohlkammern auf. Im Falle einer Crashdeformation treffen somit die Hohlkammern auf ein dahinter befindliches nicht näher dargestelltes Rad auf und deformieren, was einen zusätzlichen Abbau von Crashenergie in Form von Umformarbeiten ermöglicht. Ferner ist eine Anlagenfläche an einer Rückseite ausgebildet. Die Anlagenfläche vergrößert die Auftrefffläche des Endes 6 des Hauptquerträgers 2 auf das dahinter befindliche nicht näher dargestellte Rad. Insbesondere sind alle Ecken abgerundet, dass ein Einschneiden oder Platzen des Reifens vermieden ist.

Ferner dargestellt in Figur 2b ist eine Querschnittsansicht durch eine vertikale Strebe 4 gemäß der Schnittlinie A-A. Diese ist im Querschnitt selbst U-förmig ausgebildet. Gemäß der Querschnittsansicht der Stoßfängeranordnung 1, dargestellt in Figur 2d, sind Hauptquerträger 2 und Hilfsquerträger 3 einstückig und werkstoffeinheitlich ausgebildet, als hier Extrusionprofil. Der die beiden Hauptquerträger 2 und Hilfsquerträger 3 verbindenden vertikale Strebe 4 ist einstückig und werkstoffeinheitlich mit ausgebildet. Die restlichen Bereiche gemäß Frontansicht Figur 2a sind schneidetechnisch bearbeitet, so dass hier das zunächst beim Extrudieren hergestellte Mehrmaterial weggeschnitten ist.

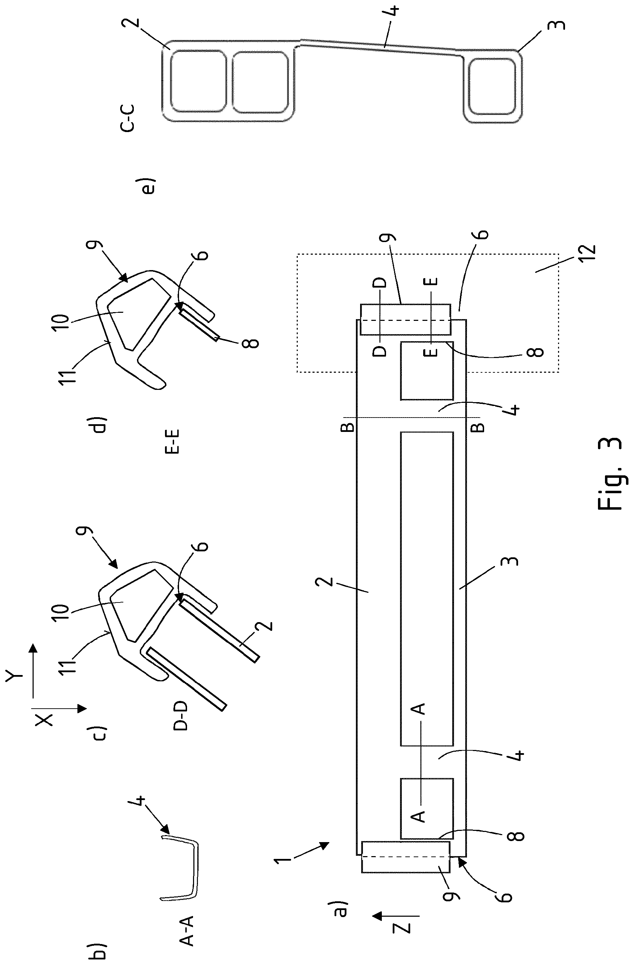

Figur 3a bis e zeigen eine zweite Ausgestaltungsvariante der vorliegenden Erfindung. Hierbei erstreckt sich das Hohlprofil, bezogen auf die Kraftfahrzeugvertikalrichtung Z über einen Großteil der Höhe der Stoßfängeranordnung 1. Mithin kann das Hohlprofil, insbesondere die Verbindung von Hauptquerträger 2 und Hilfsquerträger 3 miteinander weiter verstärken. Zusätzlich ist jedoch jeweils am außenseitigen Ende eine vertikale Verbindungsstrebe 4 ausgebildet. Das Hohlprofil ist hier gemäß der jeweiligen Schnittansicht in Figur 3c und 3d mit nur einer Hohlkammer ausgebildet. Das Hohlprofil ist jedoch auch am äußeren Ende des Hauptquerträgers 2 bzw. am äußeren Ende der vertikalen Strebe 4, mithin am äußeren Ende der Stoßfängeranordnung 1 angeordnet zur weiteren Verstärkung. Zusätzlich ist jedoch jeweils am außenseitigen Ende eine vertikalen Verbindungsstrebe 8 ausgebildet. Das Hohlprofil 9 ist hier gemäß der jeweiligen Schnittansicht in Figur 3c und 3d mit nur einer Hohlkammer 10 ausgebildet. Das Hohlprofil 9 ist jedoch auch am äußeren Ende des Hauptquerträgers 2 bzw. am äußeren Ende der vertikalen Strebe 4, mithin am äußeren Ende der Stoßfängeranordnung 1 angeordnet und steht außenseitig in Kraftfahrzeugquerrichtung Y und rückseitig in Kraftfahrzeuglängsrichtung X über. Somit trifft ebenfalls die Hohlkammer 10 auf ein dahinter befindliches nicht näher dargestelltes Rad 12 mit ihrer Anlagenfläche 11 bzw. Auftrefffläche. Die Anlagenfläche 11 bzw. Auftrefffläche weist abgerundete Ecken und eine vergrößerte Fläche im Gegensatz zu dem äußeren Ende des Hauptquerträgers 2 bzw. der vertikalen Verbindungsstrebe 4 auf. Auch insbesondere durch die höhere Erstreckung in Kraftfahrzeugvertikalrichtung Z des Hohlprofils 9 wird sichergestellt, dass ein dahinter befindliches Rad 12, angedeutet in Figur 3, bezogen auf die Kraftfahrzeugvertikalrichtung Z nicht über- oder unterwandert wird, sondern in etwa der Radmittelpunkt getroffen wird, so dass die Stoßfängeranordnung 1 auf das Rad 12 zubewegt wird.

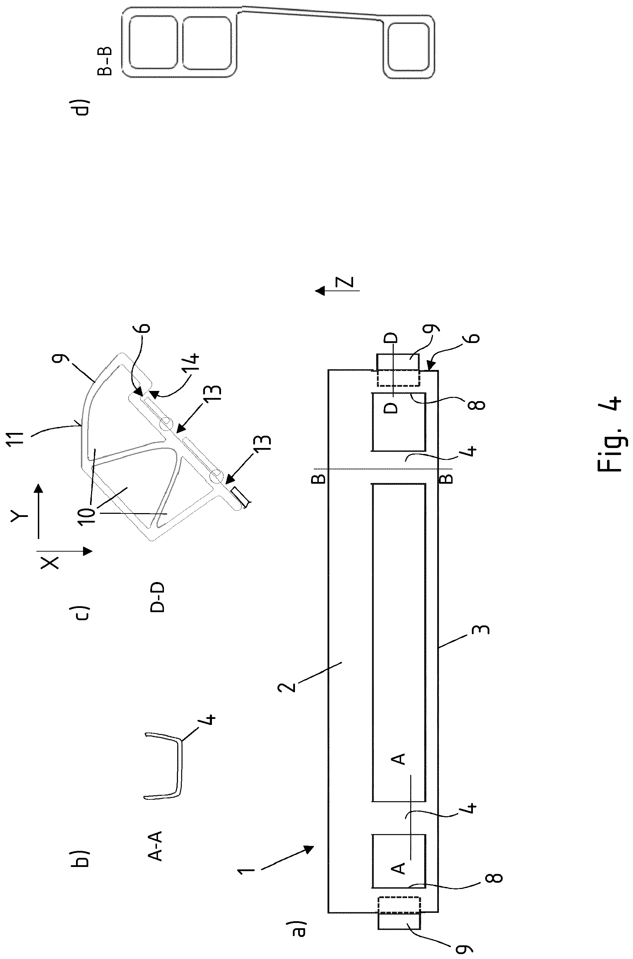

Figur 4a bis d zeigen eine dritte Ausgestaltungsvariante der vorliegenden Erfindung. Auch hier ist die Stoßfängeranordnung 1 ausgebildet aus einem oben angeordneten Hauptquerträger 2 und einem auf die Vertikalrichtung darunter angeordneten Hilfsquerträger 3.

Die endseitig an die vertikale Verbindungsstrebe 4 angeordnete Hohlkammer 10 ist hierbei durch Lochschweißungen 13 gekoppelt. Ferner findet sich ein Stufenabsatz 14, mit der das Hohlprofil 9 die vertikale Strebe außenseitig umgreift. Hierdurch wird ein zusätzlicher Formschluss erzeugt, insbesondere bei einer Crashdeformation in Kraftfahrzeuglängsrichtung X. Die Anlagefläche wird somit aufgrund des Stufenabsatzes 14 an das äußere Ende der vertikalen Verbindungsstrebe 8 gedrückt. Hierdurch findet eine zusätzliche Festigkeit steigernde Maßnahme in der Koppelung zwischen Hohlprofil 9 und vertikaler Verbindungsstrebe 8 statt. Das Hohlprofil 9 weist in diesem Falle wiederum drei Hohlkammern 10 auf, welche sich insbesondere bei Anlagenkontakt mit in Längsrichtung dahinter befindlichem Rad 12 entsprechend deformieren.

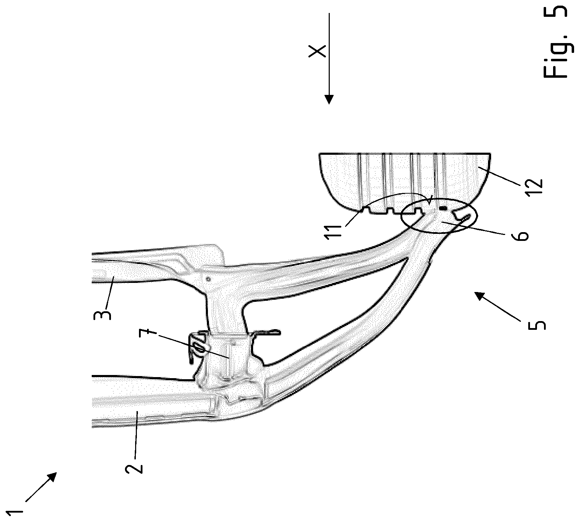

Figur 5 zeigt eine solche Deformation. Dies zeigt die Stoßfängeranordnung 1 in einer Ansicht von oben im Falle eines bereits erfolgten Crashes. Zu erkennen ist, dass die Crashbox 7 bereits gestaucht ist. Der oben angeordnete Hauptquerträger 2 und der auf die Vertikalrichtung darunter befindliche Hilfsquerträger 3 sind weiter unten angeordnet. Das zusätzliche vertikale Element im Endbereich 5 ist auf die Kraftfahrzeuglängsrichtung bezogen, auf ein Rad 12 zubewegt worden. Dies stützt sich nunmehr an einem Rad 12 ab. Zunächst kann noch ein nicht näher dargestelltes Radhaus kontaktiert werden. Es ergäbe sich somit ein weiterer Lastpfad über das Rad 12 sowie in Kraftfahrzeuglängsrichtung dahinter folgend, nicht näher dargestellten Schweller. Die Hauptquerträger 2 wird somit nicht nur ausschließlich über die Crashbox 7 eingeleitet, sondern auch über einen zweiten Lastpfad, mithin über das Rad 12 und den dahinter befindlichen Schweller in Kraftfahrzeuglängsrichtung in die Kraftfahrzeugkarosserie eingeleitet. Durch das vertikale Element 6 entsteht eine besonders gute Abstützfläche, so dass das Rad 12 in Kraftfahrzeuglängsrichtung getroffen und ein Unter- oder Überwandern des Rades 12 aufgrund der Rotationsverbindung des Rades 12 der Crashenergie wird sicher vermieden. Auf die Kraftfahrzeugvertikalrichtung bezogen hohe Aufprallfläche des vertikalen Elementes 6 in Verbindung mit Haupt- und Hilfsquerträger 2, 3 wird eine sichere Abstützung an dem Rad 12 sichergestellt. Es wird somit vermieden, dass die Stoßfängeranordnung 1 im Falle beispielsweise nur des Hauptquerträgers 2 über das Rad 12 gehoben wird und hier entsprechend keine zusätzliche Abstützung am Rad 12 erfolgen würde.

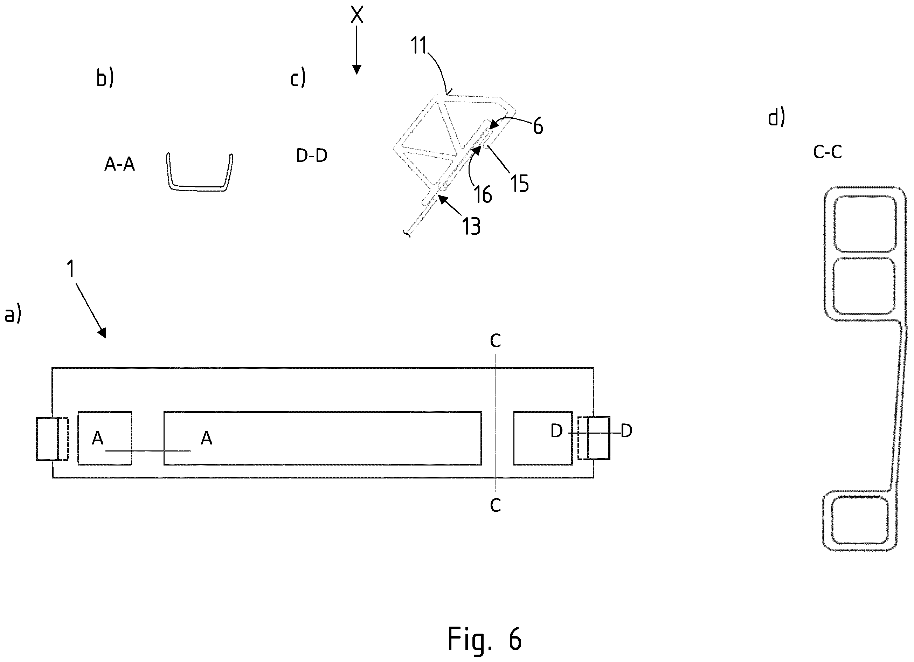

Figur 6a bis d zeigt eine weitere Ausgestaltungsvariante der vorliegenden Erfindung. Diese ist im Wesentlichen analog aufgebaut zu der Darstellung in Figur 4. Jedoch nicht nur ein Stufenabsatz 14 ausgebildet, sondern vielmehr übergreift mit einer zusätzlichen Lasche 15 das Hohlprofil 9 das außenseitige Ende des vertikalen Steges. Durch diese zusätzliche Lasche 15 wird eine Nut 16 ausgebildet, in die das äußere Ende des vertikalen Verbindungssteges eingeführt ist. Hierdurch wird auch der Formschluss weiter gesteigert, so dass bei einem Crashfalle gezielt ein Abreißen und Auftreffen der Anlagefläche 11 auf einer dahinter in Kraftfahrzeuglängsrichtung X befindliches Rad 12 ein Abreißen oder eine sonstige Beschädigung von Hohlprofil 9 und vertikalem Verbindungssteg vermieden. Auch hier ist wiederum das Hohlprofil 9 mit drei Hohlkammern 10 ausgestattet und wird mit einer Loschweißung mit dem vertikalen Verbindungssteg gekoppelt.

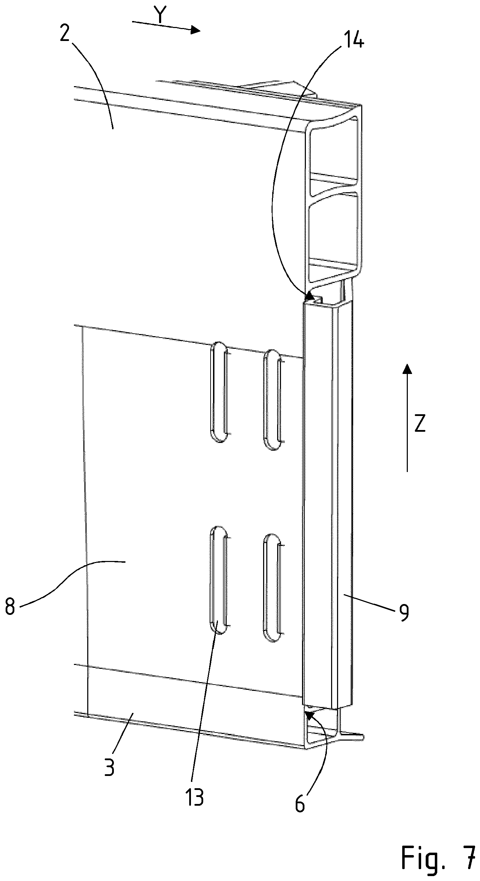

Figur 7 zeigt eine weitere Ausgestaltungsvariante. Die Lochschweißungen 13 sind jeweils in Form von Langlöchern ausgebildet. Das Hohlprofil 9 umgreift das äußere Ende mit einem Stufenabsatz 14 und steht seitlich in Kraftfahrzeugquerrichtung Y über das äußere Ende außenseitig über.

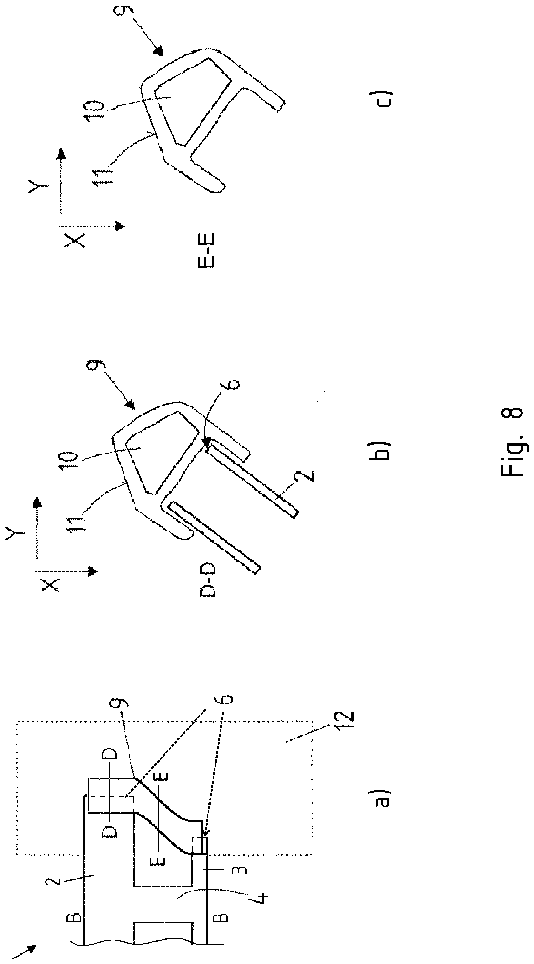

Figur 8a bis c zeigen eine weitere Ausgestaltungsvariante der vorliegenden Erfindung. Hierbei ist ein außenseitiger Teil der erfindungsgemäßen Stoßfängeranordnung 1 in Frontansicht dargestellt. Der Hauptquerträger überdeckt ein Großteil des dahinter befindlichen Rades 12. Der Hilfsquerträger 3 ist demgegenüber in Kraftfahrzeugbreite kürzer ausgebildet. Das vertikal zusätzlich angeordnete Hohlprofil 9 ist somit in Kraftfahrzeugvertikalrichtung Z orientiert verlaufend, jedoch schräg nach unten angeordnet. Hierdurch wird eine hinreichende Abstützung im Falle eines Frontalcrashs auf das dahinter befindlichen Radhaus bzw. Rad 12 erreicht. Das vertikale angeordnete Hohlprofil 9 ist somit schräg nach unten in Kraftfahrzeugquerrichtung Y abgebogen. Das Hohlprofil 9 ist in das äußere Ende 6 des oberen Querträgers sowie in das äußere Ende 6 des unteren Querträgers eingesteckt. Es ist hier gekoppelt. Gemäß der Schnittlinie E-E gibt es keine zusätzliche vertikale Strebe am Ende. Dies erleichtert insbesondere den Zusammenbau der erfindungsgemäßen Stoßfängeranordnung 1, da hier dann oberer Hauptquerträger 2 und unterer Hilfsquerträger 3 hergestellt werden können mit unterschiedlichen Längen. Den Versatz in Kraftfahrzeugquerrichtung Y kann dann das äußere Hohlprofil 9 ausgleichen. An den Enden 6 ist dies gekoppelt, beispielsweise schraubtechnisch oder auch stoffschlüssig, insbesondere durch Schweißen.

Besonders bevorzugt sind bei allen Ausführungsvarianten Hauptquerträger 2 sowie Hilfsquerträger 3 aus Leichtmetall, insbesondere Aluminiumbauteilen hergestellt. Auch kann jedoch eine Kombination aus einem Stahlbauteil mit einem Hohlprofil, welches insbesondere als Aluminiumbauteil hergestellt ist, erfolgen.

### Bezugszeichen:

- 1 -: Stoßfängeranordnung
- 2 -: Hauptquerträger
- 3 -: Hilfsquerträger
- 4 -: vertikale Strebe
- 5 -: Endabschnitt
- 6 -: äußeres Ende
- 7 -: Crashbox
- 8 -: vertikale Verbindungsstrebe
- 9 -: Hohlprofil
- 10-: Hohlkammer
- 11 -: Anlagenfläche
- 12 -: Rad
- 13 -: Lochschweißung
- 14 -: Stufenabsatz
- 15 -: Lasche
- 16 -: Nut

- Z -: Kraftfahrzeugvertikalrichtung
- X -: Kraftfahrzeuglängsrichtung
- Y -: Kraftfahrzeugquerrichtung

## Patentansprüche

1. Stoßfängeranordnung (1) für ein Kraftfahrzeug, aufweisend einen oberen Hauptquerträger (2), welcher über Crashboxen (7) an dem Kraftfahrzeug koppelbar ist und einen unteren Hilfsquerträger (3), wobei Hauptquerträger (2) und Hilfsquerträger (3) miteinander über vertikale Streben (4) gekoppelt sind, wobei die Stoßfängeranordnung (1) sich über mindestens 70% der Fahrzeugbreite erstreckt und dass der Hauptquerträger (2) und der Hilfsquerträger (3) Endabschnitte (5) aufweisen, die in Kraftfahrzeugquerrichtung (Y) gegenüber den Crashboxen (7) seitlich überstehen und Hauptquerträger (2) und Hilfsquerträger (3) einstückig und werkstoffeinheitlich hergestellt sind, **dadurch gekennzeichnet, dass** in einem äußeren Abschnitt des Endbereiches ein vertikal orientiertes Hohlprofil (9) mit einem geschlossenen Querschnitt einer Hohlkammer (10) angeordnet ist.

2. Stoßfängeranordnung (1) nach Anspruch 1, **dadurch gekennzeichnet, dass** das Hohlprofil (9) mit dem Hauptquerträger (2) und/oder Hilfsquerträger (3) gekoppelt ist.

3. Stoßfängeranordnung (1) nach Anspruch 1 oder 2, **dadurch gekennzeichnet, dass** das Hohlprofil (9) im Querschnitt zumindest längenabschnittsweise ein geschlossenes Hohlprofil (9) ist.

4. Stoßfängeranordnung (1) nach einem der vorangehenden Ansprüche, **dadurch gekennzeichnet, dass** eine zu einem Rad (12) gerichtete Fläche, insbesondere Rückseite des Hohlprofils (9) , eine vergrößerte Anlagenfläche (11) aufweist.

5. Stoßfängeranordnung nach einem der vorangehenden Ansprüche, **dadurch** g**ekennzeichnet,** dass die äußeren Kanten des Hohlprofils (9) abgerundet ausgebildet sind.

6. Stoßfängeranordnung nach einem der vorangehenden Ansprüche, **dadurch gekennzeichnet, dass** im äußeren Endbereich zwischen Hauptquerträger (2) und Hilfsquerträger (3) eine vertikale Verbindungsstrebe (8) ausgebildet ist, insbesondere einstückig und werkstoffeinheitlich mit dem Hauptquerträger (2) und dem Hilfsquerträger (3), wobei das Hohlprofil (9) zusätzlich zu der vertikalen Verbindungsstrebe (8) angeordnet ist.

7. Stoßfängeranordnung nach Anspruch 6, **dadurch gekennzeichnet, dass** das Hohlprofil (9) in Relation zu der vertikalen Verbindungsstrebe (8) außenseitig und/oder in Richtung zu dem Kraftfahrzeug orientiert angeordnet ist.

8. Stoßfängeranordnung nach einem der Ansprüche 6 oder 7, **dadurch gekennzeichnet, dass** das Hohlprofil (9) mit der vertikalen Verbindungsstrebe (8) gekoppelt ist, insbesondere stoffschlüssig und optional formschlüssig.

9. Stoßfängeranordnung nach einem der vorangehenden Ansprüche, **dadurch gekennzeichnet, dass** der Hauptquerträger (2) und der Hilfsquerträger (3) als Pressumformbauteil hergestellt sind, insbesondere aus einer Stahllegierung.

10. Stoßfängeranordnung nach einem der vorangehenden Ansprüche, **dadurch gekennzeichnet, dass** der Hauptquerträger (2) und der Hilfsquerträger (3) aus einem Extrusionsprofil hergestellt sind, aus einer Leichtmetalllegierung.

11. Stoßfängeranordnung nach einem der vorangehenden Ansprüche, **dadurch gekennzeichnet, dass** in dem Hauptquerträger eine Eindrückung oder Ausnehmung vorhanden ist, dergestalt, dass bei einer Belastung in Längsrichtung eine initiale Deformation stattfindet.

## Claims

1. Bumper assembly (1) for a motor vehicle, having an upper main crossbeam (2) which can be coupled to the motor vehicle via crash boxes (7) and a lower auxiliary crossbeam (3), wherein main crossbeam (2) and auxiliary crossbeam (3) are coupled together via vertical struts (4), wherein the bumper assembly (1) extends across at least 70% of the vehicle width and that's the main crossbeam (2) and the auxiliary crossbeam (3) have end portions (5) which project laterally beyond the crash boxes (7) in motor vehicle transverse direction (Y) and main crossbeam (2) and auxiliary crossbeam (3) are manufactured integrally and from a uniform material, **characterised in that** in an outer portion of the end region is arranged a vertically oriented hollow profile (9) with a closed cross section of a hollow chamber (10).

2. Bumper assembly (1) according to claim 1, **characterised in that** the hollow profile (9) is coupled to the main crossbeam (2) and/or auxiliary crossbeam (3).

3. Bumper assembly (1) according to claim 1 or 2, **characterised in that** the hollow profile (9) is in cross-section a closed hollow profile (9) at least in some longitudinal portions.

4. Bumper assembly (1) according to any of the preceding claims, **characterised in that** a surface aligned to a wheel (12), in particular a rear side of the hollow profile (9), has an enlarged bearing surface (11).

5. Bumper assembly according to any of the preceding claims, **characterised in that** the outer edges of the hollow profile (9) are rounded.

6. Bumper assembly according to any of the preceding claims, **characterised in that** in the outer end region between main crossbeam (2) and auxiliary crossbeam (3) is formed a vertical connecting strut (8), in particular is arranged so as to be integral and materially uniform with the main crossbeam (2) and the auxiliary crossbeam (3), wherein the hollow profile (9) is arranged in addition to the vertical connecting strut (8).

7. Bumper assembly according to claim 6, **characterised in that** in relation to the vertical connecting strut (8), the hollow profile (9) is arranged on the outside and/or is oriented in a direction towards the vehicle.

8. Bumper assembly according to any of claims 6 or 7, **characterised in that** the hollow profile (9) is coupled with the vertical connecting strut (8), in particular is material-fittingly and optionally form-fittingly coupled.

9. Bumper assembly according to any of the preceding claims, **characterised in that** the main crossbeam (2) and the auxiliary crossbeam (3) are manufactured as a press forming component, in particular from a steel alloy.

10. Bumper assembly according to any of the preceding claims, **characterised in that** the main crossbeam (2) and the auxiliary crossbeam (3) are manufactured from an extrusion profile made from a light metal alloy.

11. Bumper assembly according to any of the preceding claims, **characterised in that** an impression or a cutout is present in the main theme such that in the case of a load in longitudinal direction, an initial deformation takes place.

## Revendications

1. Dispositif amortisseur de chocs (1) pour un véhicule automobile, présentant une traverse principale (2) supérieure, qui est couplable par le biais de crashbox (7) au véhicule automobile et une traverse auxiliaire (3) inférieure, dans lequel la traverse principale (2) et la traverse auxiliaire (3) sont couplées l'une à l'autre par le biais d'entretoises verticales (4), dans lequel le dispositif amortisseur de chocs (1) s'étend sur au moins 70 % de la largeur du véhicule et que la traverse principale (2) et la traverse auxiliaire (3) présentent des sections terminales (5) qui dépassent latéralement dans le sens transversal du véhicule automobile (Y) par rapport aux crashbox (7) et la traverse principale (2) et la traverse auxiliaire (3) sont fabriquées d'un seul tenant et en un seul matériau, **caractérisé en ce que** dans une section extérieure de la zone d'extrémité un profil creux (9) orienté verticalement est agencé avec une section transversale fermée d'une chambre creuse (10).

2. Dispositif amortisseur de chocs (1) selon la revendication 1, **caractérisé en ce que** le profil creux (9) est couplé à la traverse principale (2) et/ou à la traverse auxiliaire (3).

3. Dispositif amortisseur de chocs (1) selon la revendication 1 ou 2, **caractérisé en ce que** le profil creux (9) est en section transversale au moins par sections longitudinales un profil creux (9) fermé.

4. Dispositif amortisseur de chocs (1) selon l'une quelconque des revendications précédentes, **caractérisé en ce qu'**une surface dirigée vers une roue (12), en particulier un côté arrière du profil creux (9), présente une surface d'appui (11) agrandie.

5. Dispositif amortisseur de chocs selon l'une quelconque des revendications précédentes, **caractérisé en ce que** les arêtes extérieures du profil creux (9) sont réalisées de manière arrondie.

6. Dispositif amortisseur de chocs selon l'une quelconque des revendications précédentes, **caractérisé en ce que** dans la zone d'extrémité extérieure entre la traverse principale (2) et la traverse auxiliaire (3), une entretoise de liaison (8) verticale est réalisée, en particulier d'un seul tenant et en un seul matériau avec la traverse principale (2) et la traverse auxiliaire (3), dans lequel le profil creux (9) est agencé outre l'entretoise de liaison (8) verticale.

7. Dispositif amortisseur de chocs selon la revendication 6, **caractérisé en ce que** le profil creux (9) est agencé orienté par rapport à l'entretoise de liaison (8) verticale côté extérieur et/ou en direction du véhicule automobile.

8. Dispositif amortisseur de chocs selon l'une quelconque des revendications 6 ou 7, **caractérisé en ce que** le profil creux (9) est couplé à l'entretoise de liaison (8) verticale, en particulier par liaison de matière et en option par complémentarité de formes.

9. Dispositif amortisseur de chocs selon l'une quelconque des revendications précédentes, **caractérisé en ce que** la traverse principale (2) et la traverse auxiliaire (3) sont fabriquées comme composant formé à la presse, en particulier en un alliage d'acier.

10. Dispositif amortisseur de chocs selon l'une quelconque des revendications précédentes, **caractérisé en ce que** la traverse principale (2) et la traverse auxiliaire (3) sont fabriquées en un profil d'extrusion, en un alliage métallique léger.

11. Dispositif amortisseur de chocs selon l'une quelconque des revendications précédentes, **caractérisé en ce qu'**une empreinte ou un évidement est présent de telle manière que lors d'une sollicitation dans le sens longitudinal, une déformation initiale ait lieu.
